# FASCICULE DE BREVET EUROPEEN

(11) **EP 3 393 229 B1**
(45) Date de publication et mention de la délivrance du brevet: **02.10.2019**
(21) Numéro de dépôt: 16825804.4
(22) Date de dépôt: 06.12.2016
(51) Int. Cl.: A01D 34/78, A01D 34/82

(54) **TONDEUSE ÉLECTRIQUE À DÉBLOCAGE AUTOMATIQUE DE LAME ET PROCÉDÉ DE PILOTAGE DE LA TONDEUSE**
ELEKTRISCHER MÄHER MIT AUTOMATISCHER KLINGENFREIGABE UND VERFAHREN ZUR STEUERUNG DES MÄHERS
ELECTRIC MOWER WITH AUTOMATIC BLADE UNBLOCKING AND METHOD FOR CONTROLLING THE MOWER

(30) Priorité: 23.12.2015 FR 1563189
(43) Date de publication de la demande: 31.10.2018
(73) Titulaire: PELLENC, 84120 Pertuis (FR)
(72) Inventeur: PELLENC, Roger, 84120 Pertuis (FR)
(74) Mandataire: Weber, Etienne Nicolas
(86) Numéro de dépôt international: PCT/FR2016/053228
(87) Numéro de publication internationale: WO 2017/109319

(56) Documents cités:
- EP-A1- 1 969 919
- EP-A1- 2 198 690
- GB-A- 2 199 226
- US-A1- 2012 137 643
- US-B1- 7 797 915

## Description

### Domaine technique

La présente invention concerne une tondeuse électrique du type alimenté par batterie électrique, dotée d'une fonction de déblocage automatique de lame. Elle concerne également un procédé de pilotage d'une telle tondeuse, et notamment de son moteur d'entraînement de lame.

L'invention trouve des applications dans le domaine des tondeuses ou des tondeuses débroussailleuses du type à batterie, utilisables pour l'entretien d'espaces verts privés ou publics. Elle peut être mise en oeuvre pour des tondeuses à conducteur marchant, des tondeuses à conducteur porté, voire des tondeuses robotisées autonomes.

### Etat de la technique antérieure

Les tondeuses utilisées pour l'entretien des espaces verts, comportent pour la plupart un carter de coupe logeant au moins une lame rotative, et un moteur d'entraînement des lames. Le moteur peut être un moteur thermique ou un moteur électrique. Chaque lame peut être entraînée par son propre moteur ou l'ensemble des lames peut être animé par un moteur unique.

A défaut d'un entretien méticuleux du carter de coupe il arrive que des résidus de tonte se fixent au carter, et finissent par y former des amas solides. Ces amas constituent, lorsqu'ils sont d'une certaine taille, des obstacles à la fibre rotation des lames. Un amas de végétaux peut également se former lorsqu'au cours de la tonte, une quantité de végétaux atteignant la ou les lames de coupe excède la capacité de coupe et/ou d'évacuation des végétaux.

De tels amas sont susceptibles de ralentir le mouvement de la ou des lames de coupe, voire de les bloquer.

Le document EP 2 425 701 propose de moduler la hauteur de coupe d'une tondeuse électrique autonome, de manière à éviter une surcharge de la lame en cours de tonte, et ainsi un blocage de lame.

Cette mesure ne conduit pas à une hauteur uniforme des végétaux et demeure difficilement transposable aux tondeuses à conducteur marchant, le résultat de la tonte étant médiocre d'un point de vue esthétique. Une meilleure uniformité de la coupe nécessiterait en effet au moins un passage supplémentaire. La modulation de la hauteur de coupe est également inefficace conte les amas de végétaux, mentionnés précédemment, qui se forment peu à peu suite à un nettoyage approximatif du carter de coupe, ou qui se forment brutalement selon les conditions de densités et d'humidité des végétaux coupés.
Les amas de végétaux qui encombrent le carter de coupe et qui entravent la libre rotation des lames, peuvent dans une certaine mesure être surmontés pour des tondeuses équipées d'un moteur thermique pour l'entraînement des lames.
En effet, les moteurs thermiques sont, pour certains, équipés de lanceurs manuels. L'actionnement du lanceur par un utilisateur, pour démarrer le moteur, entraîne généralement une rotation des lames forcée dans le sens de la coupe avec un couple de force important au niveau de l'axe de rotation de la lame. Aussi, l'actionnement du lanceur peut, du fait de cette rotation, suffire à détacher les amas de végétaux qui encombrent le carter de coupe.
Par contraste, le problème des amas de végétaux dans le carter de coupe reste entier pour les tondeuses électriques, dépourvues de lanceur manuel. Ainsi lorsque le couple de démarrage du moteur électrique est insuffisant pour vaincre la résistance des amas de végétaux, la ou les lames de coupe restent bloquées.

Le déblocage nécessite dans ce cas une intervention d'un utilisateur au niveau des lames et notamment à proximité de leur partie tranchante. Une telle intervention est non seulement coûteuse en temps mais surtout dangereuse. Elle n'est donc pas souhaitable.

Le document US 7 797 915 décrit une tondeuse à tambours et un système de déblocage des tambours mettant en oeuvre une contra-rotation des tambours en réponse au signal d'un capteur de vitesse de rotation.

### Exposé de l'invention

La présente invention vise à proposer une tondeuse électrique ne présentant pas les difficultés mentionnées ci-dessus.

Un but est notamment de proposer une tondeuse électrique dotée d'une fonction de déblocage ou de libération automatique des lames, sans intervention d'un utilisateur au niveau des lames.

Un but de l'invention est encore de proposer une tondeuse électrique capable de démarrer, nonobstant d'éventuels amas de végétaux susceptible d'entraver la libre rotation des lames.

Un autre but encore de l'invention est de proposer une tondeuse électrique capable de surmonter une situation de bourrage en cours de tonte, provoquant un ralentissement voire un blocage des lames.

Enfin un but de l'invention est de proposer un procédé de pilotage d'une tondeuse électrique permettant une libération automatique de la ou des lames de coupe.

Pour atteindre ces buts l'invention concerne plus précisément une tondeuse électrique comprenant :
- au moins une lame de coupe rotative,
- un moteur électrique rotatif d'entraînement de la lame de coupe,
- une unité de pilotage électronique du moteur électrique configurée pour piloter une rotation du moteur électrique dans un premier sens de rotation lors d'une phase de tonte, et pour piloter une rotation dudit moteur électrique dans un deuxième sens de rotation, opposé au premier sens de rotation, lors d'une phase de lancement de lame.
   Conformément à l'invention,
   - le moteur électrique est un moteur du type sans balai, et
   - l'unité de pilotage est pourvue d'un circuit de mesure d'un courant induit dans au moins un bobinage du moteur électrique, et configurée pour Initier la phase de lancement de lame en réponse à une absence de courant induit dans le bobinage du moteur électrique.

L'unité de pilotage peut encore être configurée pour détecter une éventuelle situation de blocage de lame, lors d'un démarrage du moteur électrique, et pour initier automatiquement la phase de lancement de lame en réponse à une situation de blocage.

Dans l'exposé qui suit il est fait référence, par simplification, à une seule lame de coupe et un seul moteur électrique d'entraînement de la lame. Il convient toutefois de préciser que la tondeuse de l'invention peut être pourvue de plusieurs lames de coupe. Les lames de coupe peuvent être des lames tournant autour d'un axe sensiblement vertical, dans une position de tonte de la tondeuse, ou autour d'un axe sensiblement horizontal. Les lames tournent autour d'un axe sensiblement horizontal dans le cas de tondeuses pourvues d'un tambour de coupe hélicoïdal.

Dans le cas où la tondeuse dispose de plusieurs lames, un moteur électrique d'entraînement des lames unique peut être prévu. Plusieurs moteurs d'entraînement, par exemple un moteur par lame, peuvent également être envisagés. L'unité de pilotage électronique est alors configurée pour le pilotage du ou des moteurs d'entraînement des différentes lames de coupe.
L'invention repose sur un constat que l'entrave à la rotation que constitue un amas de végétaux n'oppose pas nécessairement la même résistance à la rotation dans les deux sens de rotation possibles de la lame. Un léger mouvement de dégagement de lame s'avère souvent possible au moins sur une fraction de tour de lame.

Le pilotage de manière transitoire du moteur dans le deuxième sens de rotation au cours de la phase de lancement de lame permet alors de dégager la lame et de ménager une course de lame libre, par exemple, sur une fraction de tour de lame. Si cette course libre ne dégage pas entièrement la lame elle permet pour le moins à la lame d'acquérir une certaine vitesse de rotation et donc un certain moment cinétique de rotation. Le moment cinétique de rotation est mis à profit pour vaincre le blocage éventuel dans le cas où le seul couple du moteur serait insuffisant. De plus, lors de cette fraction de tour en sens opposé au sens de rotation défini pour la coupe, la lame peut aussi rencontrer l'éventuel amas de végétaux lors de sa rotation en sens opposé, le déstabilisant alors et amoindrissant sa résistance pour une prochaine rencontre avec la lame lors de sa reprise de rotation dans le sens de la coupe.

Au terme de la phase transitoire de lancement de lame, la rotation dans le premier sens de rotation peut être reprise.
L'unité de pilotage peut être en outre configurée pour détecter une situation de blocage persistant de lame lors de la phase de lancement de lame et pour provoquer, dans ce cas, une opération de déblocage comprenant le pilotage d'une séquence de rotations du moteur électrique alternativement dans le premier et dans le deuxième sens de rotation. Ceci correspond à une situation moins favorable dans lequel une simple rétro rotation en phase de lancement est insuffisante pour dégager la lame. Le pilotage d'une nouvelle séquence de rotation dans un sens de rotation puis dans le sens inverse permet alors d'insister et d'augmenter les chances de vaincre le blocage de la lame.

L'opération de déblocage peut être interrompue :
- dès la disparition de la situation de blocage,
- au bout d'une durée prédéterminée, par exemple de quelques secondes,
- au terme d'un nombre prédéterminé d'inversion de sens, par exemple une dizaine d'inversions.

En l'absence de déblocage de la lame au terme de la séquence, l'alimentation du moteur peut être interrompue automatiquement pour mettre le moteur en sécurité et le cas échéant alerter le conducteur pour lui permettre d'intervenir à proximité de la lame.

La phase de lancement, peut être initiée de différentes manières.

Selon une première possibilité l'unité de pilotage est configurée pour initier la phase de lancement de lame de manière automatique lors de chaque démarrage du moteur électrique d'entraînement de la lame de coupe. Dans ce cas la détection d'une éventuelle situation de blocage ne constitue pas un préalable à la phase de lancement. On entend par démarrage du moteur électrique un démarrage pouvant intervenir à l'issue d'une période de remisage ou d'un état hors service de la tondeuse, ou pouvant intervenir en cas d'arrêt de la rotation en cours d'utilisation de la tondeuse. Dans ce dernier cas il s'agit d'un redémarrage.

Par ailleurs, on considère que la phase de lancement de lame est initiée de manière automatique lorsqu'elle est initiée en l'absence d'une commande d'un utilisateur de la tondeuse, spécifique à la phase de lancement de lame.
Une commande de l'utilisateur pour le démarrage ou le redémarrage de la tondeuse n'est pas considérée comme une commande spécifique à la phase de lancement de lame.

Selon une autre possibilité, et comme évoqué ci-dessus, l'unité de pilotage peut être configurée pour détecter une situation de blocage de lame lors d'un démarrage du moteur électrique d'entraînement de la lame de coupe, et pour initier automatiquement la phase de lancement de lame en réponse à une détection de la situation de blocage.
Ainsi, la phase de lancement n'est pas nécessairement initiée dans tous les cas de démarrage mais peut être initiée seulement si une situation de blocage est détectée. Dans ce cas aussi, une situation de blocage reste transparente pour l'utilisateur dont la seule action est alors de lancer un démarrage de la tondeuse.

Une situation de blocage de lame se traduit également par un blocage du moteur d'entraînement de lame, en raison de leur couplage en rotation. On considère qu'un blocage correspond soit à une absence totale de rotation, soit à une rotation limitée, inférieure à un tour, soit encore à une rotation avec une vitesse de rotation très Inférieure, par exemple d'un facteur 10, à une vitesse de rotation souhaitée.

Enfin, selon une troisième possibilité, la tondeuse peut comporter une interface de commande reliée à l'unité de pilotage du moteur, l'interface de commande comprenant un organe de déclenchement de la phase de lancement de lame. Dans ce cas, l'initiation de la phase de lancement demande une action de l'utilisateur de la tondeuse sur l'organe de déclenchement manuel de l'interface, par exemple un bouton, un levier ou une pédale.

L'existence d'une possibilité de déclenchement de la phase de lancement de lame par l'utilisateur n'est pas exclusive d'un déclenchement automatique tel que décrit précédemment.

Pour la détection d'une situation de blocage de lame, l'unité de pilotage peut être pourvue d'un circuit de mesure d'un courant induit dans un bobinage du moteur électrique et éventuellement d'un courant d'alimentation électrique du moteur électrique.

Dans le cas d'un moteur d'entraînement de la lame du type sans balai, la mesure de courants induits dans les bobinages du stator du moteur est utilisée pour déterminer la position du rotor et pour piloter les courants d'alimentation du moteur. La détection d'une absence de courants induits par le rotor, en dépit de l'alimentation électrique du moteur, caractérise une situation de blocage du moteur et donc de la lame de coupe.
Une situation de blocage peut ainsi être établie sans capteur de rotation ou de vitesse de rotation associé au moteur ou à la lame de coupe.

Plus précisément un circuit de mesure du courant induit peut être prévu pour un ou plusieurs bobinages du stator. Les moteurs du type sans balai, du type utilisés dans le cadre de l'invention, présentent en effet un stator avec plusieurs bobinages, généralement au nombre de trois, ou davantage, auxquels sont appliqués de manière cyclique des tensions d'alimentation pour mettre le moteur en rotation. Il s'agit d'une commande en tension à phases multiples, telle qu'une commande triphasée, par exemple.
La mesure du courant induit n'est pas une mesure directe mais une mesure indirecte établie à partir d'une mesure de courants dans au moins deux bobinages du stator, pour un moteur triphasé. Le courant circulant dans les bobinages du stator dépend en effet des tensions appliquées aux bobinages, des résistances électriques des bobinages, des inductions des bobinages et de l'effet d'une force contre électromotrice résultant du mouvement des aimants du rotor devant les bobinages du stator. C'est la partie du courant résultant de cette force contre-électromotrice, appelée courant induit, qui permet de déterminer la rotation, l'absence de rotation et le cas échéant, la vitesse de rotation du moteur. Comme indiqué ci-dessus, le courant induit est mesuré de manière indirecte car établi à partir du courant mesuré dans plusieurs bobinages et à partir des autres paramètres mentionnés ci-dessus.
On considère, dans ce cas, que le blocage du moteur traduit un blocage de lame en raison d'un couplage en rotation du moteur et de la lame. L'unité de pilotage peut aussi comporter un circuit de mesure du courant d'alimentation. La mesure du courant d'alimentation s'entend comme le courant appliqué soit à un ou plusieurs bobinages particuliers du stator, soit à l'ensemble des bobinages du stator. Dans ce cas, une situation de blocage de la lame de coupe et du moteur est caractérisée par une simple surconsommation électrique du moteur. Cette option ne fait pas partie de l'invention revendiquée.

De manière accessoire, la tondeuse peut comporter un mécanisme de réglage d'une hauteur de coupe. Il s'agit, par exemple, d'un vérin électrique, et d'une unité de commande du vérin. Elle peut-être configurée pour augmenter automatiquement la hauteur de coupe lors de la phase de lancement de lame ou lors d'un bourrage. Le mécanisme de réglage de la hauteur de coupe peut agir, par exemple, sur la position des roues de la tondeuse, sur la position d'une unité de coupe par rapport à un châssis de la tondeuse ou encore sur une position en hauteur de la lame de coupe par rapport à un châssis de la tondeuse. L'augmentation de la hauteur de coupe lors de la phase de lancement de lame permet de retirer de la lame de coupe tout ou partie des végétaux éventuellement présents sous la lame ou en regard de la lame au moment de la phase de lancement, et ainsi favoriser la mise en rotation de la lame.

Un procédé de pilotage de la tondeuse peut comporter :
- au moins une phase de repos lors de laquelle le moteur électrique n'est pas alimenté en énergie,
- au moins une phase de tonte lors de laquelle le moteur électrique est alimenté en énergie et est piloté pour une rotation dans un premier sens de rotation, correspondant à une rotation de la lame de coupe dans un sens de coupe de végétaux,
- au moins une phase de lancement de lame transitoire lors de laquelle le moteur électrique est temporairement piloté pour une rotation dans un deuxième sens opposé au premier sens de rotation.

Les différentes phases du procédé peuvent être initiées ou reprises plusieurs fois. Par ailleurs, l'ordre des différentes phases peut être différent de celui indiqué ci-dessus.

La phase de tonte correspond à une rotation de la lame dans un sens permettant de couper d'éventuels végétaux à tondre. Elle n'implique pas nécessairement la tonte effective de végétaux, ni la présence effective de végétaux dans la zone de coupe de la lame.

De la manière déjà décrite, plusieurs possibilités sont offertes pour initier la phase de lancement de lame. En particulier :
- la phase de lancement de lame peut être initiée automatiquement lors d'un démarrage du moteur électrique,
- la phase de lancement de lame peut être initiée en réponse à une détection d'une situation de blocage de lame lors du démarrage du moteur électrique.
- la phase de lancement de lame peut être initiée en réponse à une détection d'une situation de blocage de lame lors de la phase de tonte.
- la phase de lancement de lame peut être initiée en réponse à une commande de l'utilisateur.

On considère que la phase de lancement de lame est initiée lors d'un démarrage du moteur lorsqu'elle est consécutive à une commande de mise sous tension du moteur électrique d'entraînement de la lame.

La détection d'une situation de blocage de la lame peut être caractérisée, comme décrit précédemment, par une absence de rotation du moteur et/ou de la lame. Elle peut aussi être caractérisée, par une vitesse de rotation anormalement faible du moteur.

Ainsi, et selon une mise en oeuvre particulière du procédé, la phase de lancement de lame peut être initiée en réponse à la détection d'une vitesse de rotation du moteur électrique dans le premier sens de rotation, inférieure à une vitesse de consigne.

La phase de lancement de lame est transitoire dans la mesure où il ne s'agit pas d'un mode de fonctionnement permanent de la tondeuse. Elle est suivie de la phase de tonte ou, en cas de blocage persistant de la lame de coupe, d'une phase de repos.
La phase de lancement est également transitoire dans le sens où elle est de préférence limitée dans le temps.

La phase de lancement de lame peut être maintenue, par exemple, pendant une durée correspondant à une fraction de révolution de la lame de coupe.

La phase de lancement de lame peut encore être maintenue pendant une durée correspondant à un nombre de révolutions de la lame de coupe compris entre 0,5 et 5.

A l'issue de la phase de lancement le procédé peut comporter l'un parmi une reprise de la phase de tonte et une continuation avec la phase de tonte.

Par ailleurs, la reprise de la phase de tonte, respectivement la continuation de la phase de tonte peut être conditionnelle d'une vitesse de rotation du moteur ou de la lame, lors de la phase de lancement de lame, supérieure à une valeur de consigne.
Lorsque la vitesse de rotation est insuffisante, ou en cas de blocage, la tondeuse peut être mise en phase de repos. Selon une autre possibilité, une phase de déblocage comprenant, de la manière déjà décrite, une alternance de rotations dans le premier sens de rotation et dans le deuxième sens de rotation, peut aussi être initiée.

Enfin, et comme mentionné plus haut, la phase de lancement de lame peut comporter un relevage transitoire d'une hauteur de coupe de la tondeuse.

D'autres caractéristiques et avantages de l'invention ressortent de la description qui suit en référence aux figures des dessins. Cette description est donnée à titre illustratif et non limitatif.

### Brève description des figures

La figure 1 est une perspective d'une tondeuse à conducteur marchant conforme à invention.
La figure 2 est une coupe partielle de la tondeuse de la figure 1 passant par des arbres d'entraînement de lames de coupe.
La figue 3 est un logigramme illustrant les principaux aspects d'un procédé de pilotage de la tondeuse.

### Description détaillée de modes de mise en oeuvre de l'invention.

Des parties identiques ou similaires des différentes figures sont repérées avec les mêmes signes de référence de manière que l'on puisse se reporter d'une figure à l'autre.

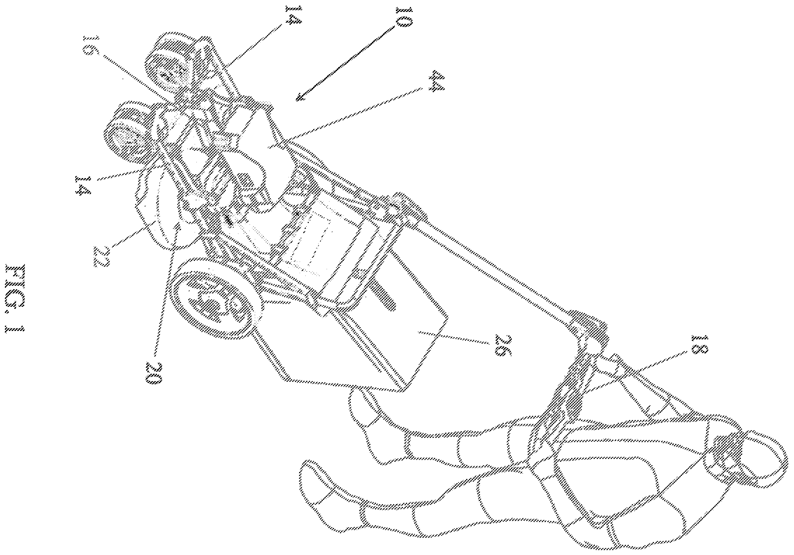

La tondeuse de la figure 1 est une tondeuse 10 de type à conducteur marchant. Elle comprend une unité de coupe 20 montée sur un châssis 14. L'unité de coupe est reliée au châssis par une suspension à parallélogramme non visible sur la figure 1. Elle présente une liberté de déplacement vertical par rapport au châssis 14 de manière à pouvoir la rapprocher ou l'éloigner du sol et ainsi modifier la hauteur de coupe. Le déplacement vertical de l'unité de coupe est assuré par un mécanisme à vérin électrique 16.

Une interface 18 disposée à l'extrémité d'un guidon comprend diverses commandes et éventuellement un afficheur. Elle permet à un utilisateur de conduire la tondeuse en réglant, le cas échéant, ses paramètres de fonctionnement.

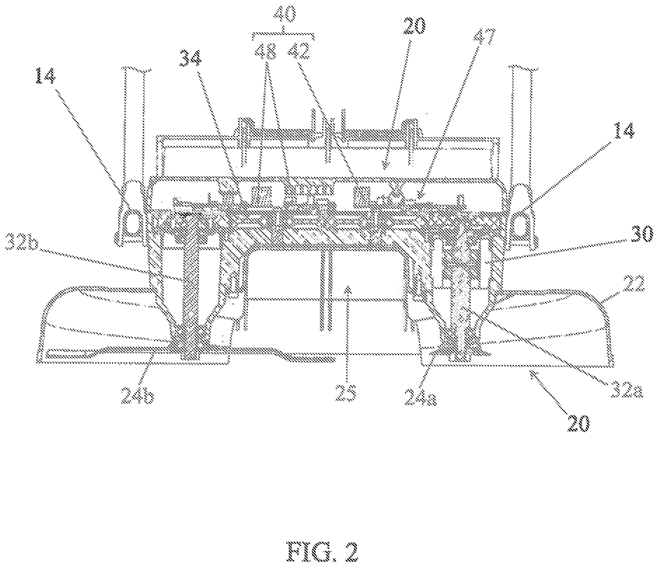

Comme le montre encore mieux la figure 2, l'unité de coupe 20 comprend un carter de coupe 22 logeant deux lames de coupe 24a, 24b et présentant un canal 25 d'évacuation de la tonte vers un bac de ramassage 26 visible à la figure 1. l'unité de coupe 20 comprend également un moteur 30 d'entraînement des lames. Il s'agit d'un moteur électrique, et, dans l'exemple illustré, d'un moteur du type sans balal.
Le moteur 30 d'entraînement des lames comprend un arbre de moteur 32a à l'extrémité duquel est montée l'une des lames de coupe 24a. Un système de transmission 34 à roues dentées, rend solidaires en rotation l'arbre de moteur 32a et un deuxième arbre 32b sur lequel est montée la deuxième lame de coupe 24b. Le Jeu de roues dentées du système de transmission peut être remplacé par une transmission à courroie. Ainsi, les deux lames de coupe 24a et 24b sont solidaires en rotation l'une de l'autre et solidaire en rotation du moteur d'entraînement 30.

l'unité de coupe 20 comprend enfin une unité de pilotage 40 du moteur électrique. L'unité de pilotage comprend une première carte électronique 42 dédiée à la gestion de l'alimentation électrique du moteur à partir d'une batterie 44 visible à la figure 1. La première carte électronique 42 permet en particulier de commander des tensions et une séquence de tensions appliquées aux différents bobinages du stator du moteur 30, pour fixer la rotation du moteur, le sens de rotation du moteur et la vitesse de rotation du moteur.

L'unité de pilotage 40 comprend encore une deuxième carte électronique 47 destinée à la détermination d'un courant induit par le rotor dans un ou plusieurs bobinages du stator du moteur 30. La deuxième carte électronique 47 comprend un ou plusieurs circuits de mesure de courant reliés à un ou plusieurs des bobinages du stator. Elle reçoit en outre des données de commande du moteur de la première carte électronique 42. A partir des courants mesurés, et à partir du courant induit qui en est déduit, la deuxième carte électronique 47 permet notamment d'estimer la position du rotor en rotation et son mouvement. Ceci revient à mesurer la rotation ou l'absence de rotation des lames, solidaires en rotation du moteur 30.
La deuxième carte électronique 47, et les circuits de mesure du courant peuvent également être mis à profit pour déterminer un courant d'alimentation global du moteur, et déduire une situation de blocage du moteur d'une augmentation anormale de ce courant.
D'autres cartes électroniques 48 de l'unité de pilotage 40 sont prévues pour des fonctions accessoires de l'unité de pilotage telles que la commande de moteurs électriques d'avancement de la tondeuse, la commande du vérin électrique 18 mentionné précédemment ou encore de l'interface 18.

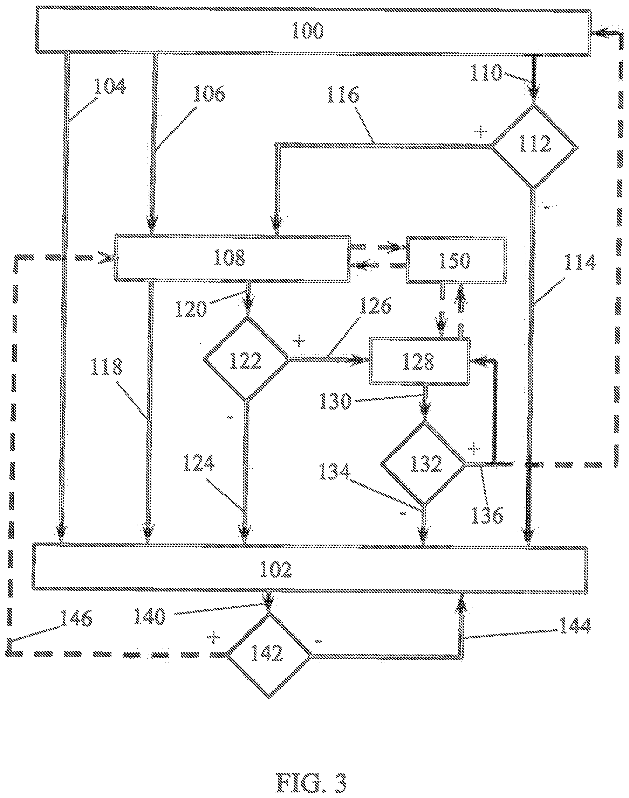

Le logigramme de la figure 3 illustre le fonctionnement de la tondeuse et notamment le pilotage du moteur électrique 30 d'entraînement des lames.

La référence 100 de la figure 3 correspond à une phase de repos du moteur électrique 30 dans laquelle il n'est pas alimenté. Le moteur et les lames ne tournent pas. La phase de repos 100 est occupée par exemple lors d'un remisage de la tondeuse, lors d'une mise hors service, ou lors d'une intervention humaine sur les lames de coupe, par exemple.

Un démarrage du moteur peut être provoqué, par exemple, par une action d'un utilisateur sur un bouton poussoir ou un interrupteur à clé de l'interface 18 visible à la figure 1. Le démarrage du moteur électrique marque le passage de la phase de repos 100 à une phase de tonte 102 lors de laquelle le moteur électrique d'entraînement des lames est alimenté pour une rotation dans un premier sens de rotation. Le premier sens de rotation correspond également à un sens de rotation des lames adapté à la tonte. Dans la phase de tonte la tondeuse est utilisable pour tondre des végétaux, et le cas échéant, recueillir les végétaux tondus dans le bac de ramassage 26.

Dans l'exemple illustré, le passage de la phase 100 de repos à la phase de tonte 102 au moment du démarrage peut avoir lieu de trois façons.
Selon une première possibilité, indiquée par une flèche 104, le passage de la phase de repos à la phase de tonte peut être immédiat. Les lames de coupe sont ainsi activées en rotation dans le sens de coupe des végétaux.
Selon une deuxième possibilité, indiquée par une flèche 106, le passage de la phase de repos à la phase de tonte peut avoir lieu par l'intermédiaire d'une phase de lancement de lame 108.

Comme mentionné précédemment, la phase de lancement 108 est une phase transitoire de courte durée lors de laquelle le moteur électrique d'entraînement des lames est alimenté pour une rotation dans le deuxième sens de rotation opposé au premier sens de rotation. La phase de lancement de lame peut être accompagnée par la commande d'un relevage 150 de l'unité de coupe, permettant, si nécessaire, de limiter la résistance de coupe au niveau des lames de coupe.

Selon une troisième possibilité, indiquée avec une flèche 110, le passage par la phase de lancement 108 peut être conditionnel d'une étape 112 de vérification d'une absence de blocage des lames. La vérification a lieu, par exemple, en alimentant le moteur électrique pour une rotation dans le premier sens de rotation, et en vérifiant si le capteur de rotation 48 (figure 2) émet un signal de rotation.
En l'absence de blocage, l'étape 112 de vérification est Immédiatement suivie par la phase de tonte 102 comme Indiqué par une flèche 114. Dans le cas contraire, l'étape de vérification peut être poursuivie par la phase de lancement de lame 108, comme indiqué par la flèche 118.

A l'issue de la phase de lancement de lame 108, le moteur électrique peut passer directement en phase de tonte 102 comme l'indique une flèche 118. La phase de lancement peut aussi comporter, ou être suivie par une étape 122 de vérification d'absence de blocage comme indiqué par la flèche 120. Cette étape est comparable à l'étape 112 de vérification d'absence de blocage mentionnée précédemment.
Comme le montre une flèche 124, l'étape de vérification d'absence de blocage 122 de la phase de lancement de lame 108 est suivi par la phase de tonte en l'absence de blocage.
Dans le cas contraire, c'est-à-dire en cas de blocage, la phase de lancement de lame 108, est poursuivie, comme indiqué par une flèche 128 par une étape de déblocage 128. L'opération de déblocage 128 comprend, comme mentionné précédemment, une séquence rapide d'alimentation du moteur électrique dans le premier et dans le deuxième sens de rotation. Le déblocage revient, en quelque sorte, à répéter plusieurs fois une opération de lancement de lame dans des sens de rotation opposés.

Une nouvelle étape 132 de vérification d'absence de blocage de la lame, indiquée par la flèche 130 est prévue à l'issue de l'étape de déblocage.
Lorsque l'étape de vérification 132 permet de constater un déblocage, c'est-à-dire une rotation du moteur, et donc des lames, elle est poursuivie, comme le montre la flèche 134 par la phase de tonte 102.
A l'inverse, un échec du déblocage constaté lors de l'étape 132 de vérification, après un nombre prédéterminé de tentatives de rotation en sens opposé, ou après une durée prédéterminée, est suivi, comme le montre la flèche 138 par un retour à la phase de repos de manière à permettre une éventuelle opération de maintenance ou de déblocage manuel des lames. Cette phase de retour est éventuellement associée à la présentation d'un signal de défaut à l'utilisateur (signal visuel, sonore, ...)
La référence 142 Indique une éventuelle opération de contrôle de la rotation qui, comme le montre la flèche 140, peut avoir lieu au cours de la phase de tonte 102. Il peut s'agir d'une vérification continue ou périodique de la rotation du moteur d'entraînement des lames ou une rotation des lames. Elle est comparable aux étapes de vérification 112, 122 et 132 mentionnées précédemment.
En cas de rotation normale, la phase de tonte 102 est poursuivie comme indiqué par une flèche 144.
En cas de blocage soudain, le pilotage du moteur peut reprendre la phase de lancement de lame 108 comme indiqué par une flèche 146. Elle peut être accompagnée éventuellement d'un relevage 150 de l'unité de coupe.
il convient de rappeler que la figure 3, n'illustre qu'une possibilité particulière de pilotage du moteur d'entraînement des lames.

## Revendications

1. Tondeuse électrique comprenant :
- au moins une lame de coupe rotative (24a, 24b),
- un moteur électrique rotatif (30) d'entraînement de la lame de coupe,
- une unité de pilotage électronique (40) du moteur électrique configurée pour piloter une rotation du moteur électrique dans un premier sens de rotation lors d'une phase de tonte (102), et
pour piloter une rotation dudit moteur électrique dans un deuxième sens de rotation opposé au premier sens de rotation, lors d'une phase de lancement de lame (108),
**caractérisée en ce que** :
- le moteur électrique est un moteur du type sans balai et
- l'unité de pilotage (40) est pourvue d'un circuit de mesure d'un courant induit dans au moins un bobinage du moteur électrique, et configurée pour initier la phase de lancement de lame en réponse à une absence de courant induit dans le bobinage du moteur électrique.

2. Tondeuse selon la revendication 1, dans laquelle l'unité de pilotage est en outre configurée pour initier la phase de lancement de lame de manière automatique lors de chaque démarrage du moteur électrique.

3. Tondeuse selon l'une des revendications 1 ou 2 dans laquelle l'unité de pilotage est configurée pour détecter une situation de blocage de lame lors de la phase de lancement de lame et pour provoquer une opération de déblocage (128) comprenant le pilotage d'une séquence de rotations du moteur électrique alternativement dans le premier et dans le deuxième sens de rotation.

4. Tondeuse selon l'une des revendications précédentes, comprenant un mécanisme électrique (16) de réglage d'une hauteur de coupe configuré pour un relevage transitoire d'une hauteur de coupe de la tondeuse lors d'une phase de lancement de lame.

5. Tondeuse selon la revendication 1, comprenant une interface de commande (18) reliée à l'unité de pilotage du moteur, l'interface de commande comprenant un organe de déclenchement de la phase de lancement de lame.

## Patentansprüche

1. Elektrischer Mäher, der Folgendes umfasst:
mindestens eine drehbare Schneideklinge (24a, 24b),
einen drehbaren Elektromotor (30) zum Antrieb der Schneideklinge,
eine elektronische Steuereinheit (40) des Elektromotors, die dazu konfiguriert ist, eine Drehung des Elektromotors in eine erste Drehrichtung während eines Mähschritts (102) zu steuern, und
zum Steuern einer Drehung des Elektromotors in eine zweite Drehrichtung, die der ersten Drehrichtung entgegengesetzt ist, während eines Schritts (108) des Ausfahrens der Klinge,
**dadurch gekennzeichnet, dass**:
- der Elektromotor ein bürstenloser Motor ist und
- die Steuereinheit (40) mit einer Messschaltung für einen induzierten Strom in mindestens einer Spule des Elektromotors ausgestattet ist und dazu konfiguriert ist, den Schritt des Ausfahrens der Klinge als Reaktion auf eine Abwesenheit von induziertem Strom in der Spule des Elektromotors einzuleiten.

2. Mäher nach Anspruch 1, in welchem die Steuereinheit ferner dazu konfiguriert ist, den Schritt des Ausfahrens der Klinge während jedes Anlassens des Elektromotors automatisch einzuleiten.

3. Mäher nach einem der Ansprüche 1 oder 2, in welchem die Steuereinheit dazu konfiguriert ist, eine Klingenblockierungssituation während des Ausfahrschritts der Klinge zu detektieren und einen Freigabevorgang (128) zu veranlassen, der die Steuerung einer Sequenz von Drehungen des Elektromotors abwechselnd in der ersten und der zweiten Drehrichtung umfasst.

4. Mäher nach einem der vorhergehenden Ansprüche, der einen elektrischen Mechanismus (16) zur Einstellung einer Schneidehöhe umfasst, der zu einem Übergangsanheben einer Schneidehöhe des Mähers während eines Schritts des Ausfahrens der Klinge konfiguriert ist.

5. Mäher nach Anspruch 1, der eine Steuerschnittstelle (18) umfasst, die mit der Steuereinheit des Motors verbunden ist, wobei die Steuerschnittstelle eine Einrichtung zum Auslösen des Schritts des Ausfahrens der Klinge umfasst.

## Claims

1. An electric mower comprising:
- at least one rotary cutting blade (24a, 24b),
- a rotary electric motor (30) for driving the cutting blade, and
- an electronic control unit (40) for the electric motor configured to control rotation of the electric motor In a first direction of rotation in a cutting phase (102), and to control rotation of the electric motor in a second direction of rotation opposite to the first direction of rotation in a blade start-up phase (108),
**characterised in that**:
- the electric motor is a motor of brushless type, and
- the control unit (40) is provided with a circuit for measuring a current induced in at least one winding of the electric motor and is configured to initiate the blade start-up phase in response to an absence of current induced in the winding of the electric motor.

2. A mower according to claim 1 wherein the control unit is also configured to initiate the blade start-up phase automatically upon each start of the electric motor.

3. A mower according to one of claims 1 and 2 wherein the control unit is configured to detect a blade blocking situation in the blade start-up phase and to cause an unblocking operation (128) comprising control of a sequence of rotations of the electric motor alternately in the first and in the second directions of rotation.

4. A mower according to one of the preceding claims comprising an electric mechanism (16) for adjustment of a cutting height which is configured for temporary lifting of a cutting height of the mower in a blade start-up phase.

5. A mower according to claim 1 comprising a control interface (18) connected to the control unit of the motor, the control interface comprising a member for triggering the blade start-up phase.
